# EUROPEAN PATENT APPLICATION

(11) **EP 2 749 992 A2**
(43) Date of publication of application: **02.07.2014**
(21) Application number: 13198855.2
(22) Date of filing: 20.12.2013
(51) Int. Cl.: G06F 3/01, G06F 3/16, G06K 9/00

(54) **Information processing device, information processing method and computer program to determine a mood**

(30) Priority: 28.12.2012 JP 2012287635
(71) Applicant: Sony Corporation, Tokyo 108-0075 (JP)
(72) Inventor: Rodrigues, Dore, Minato-ku, Tokyo 108-0075 (JP); Chousokabe, Yoshihiro, Minato-ku, Tokyo 108-0075 (JP); Yamaguchi, Takahide, Minato-ku, Tokyo 108-0075 (JP); Wakamatsu, Hideki, Minato-ku, Tokyo 108-0075 (JP)
(74) Representative: Meldrum, David James

(57) **Abstract**

An information processing device may include a control device to determine a mood in a space based on sensing data from at least one sensing device placed in the space, and to execute an appropriate operation based on the mood.

## Description

### [CROSS-REFERENCE TO RELATED APPLICATIONS]

The present application claims priority from JP 2012-287635 filed December 28, 2012 in the Japanese Patent Office, the entire content of which is hereby incorporated herein by reference.

### BACKGROUND

This disclosure relates to an information processing device, an information processing method and a computer program.

Various technologies using data obtained by analyzing music data have been proposed. For example, technologies of mapping music data using metadata obtained by analyzing the music data are disclosed in Japanese Patent Laid-Open Publication Nos. 2008-250857 and 2010-117973.

### SUMMARY

Thus, technology for executing an appropriate process for music data using data that may be obtained by analyzing the music data has been proposed, but analysis of data and execution of an appropriate process for the data are possible if a range of information that is an analysis target is further expanded.

Particularly, technology for a sensor capable of acquiring content of an action of a person has been developed, and it is considered possible to provide an appropriate process to a person by analyzing the content of the person's action acquired through the sensor or the like. If the appropriate process is able to be provided to the person by analyzing the content of the person's action, the person can omit efforts of manually finding desired data or a process, and improvement of convenience can be expected.

Therefore, this disclosure provides an information processing device, an information processing method and a computer program, which are new and improved, capable of analyzing information acquired by a sensor and executing an appropriate process for content of an action based on a result of the analysis.

Particular aspects are set out in the appended claims

According to an embodiment of the present disclosure, an information processing device may include a control device to determine a mood in a space based on sensing data from at least one sensing device placed in the space, and to execute an appropriate operation based on the mood.

According to an embodiment of the present disclosure, an information processing system may include a first device configured to determine a mood in a space based on sensing data from at least one sensing device placed in the space; and a second device to execute an appropriate operation based on the mood.

According to an embodiment of the present disclosure, an information processing method may include determining, by a processor, a mood in a space based on sensing data from at least one sensing device placed in the space, and executing an appropriate operation based on the mood.

According to an embodiment of the present disclosure, a recording medium recorded with a program executable by a computer, the recording medium may be non-transitory. The program may include determining a mood in a space based on sensing data from at least one sensing device placed in the space, and executing an appropriate operation based on the mood.

As described above, according to this disclosure, it is possible to provide an information processing device, an information processing method and a computer program, which are new and improved, capable of analyzing information acquired by the sensor and executing an appropriate process for content of an action based on a result of the analysis.

### BRIEF DESCRIPTION OF THE DRAWINGS

Embodiments of the present teachings will now be described with reference to the accompanying drawings, throughout which like parts are referred to by like references, and in which:
FIG. 1 is an illustrative diagram illustrating an overview of an embodiment of this disclosure;
FIG. 2 is an illustrative diagram illustrating a functional configuration example of an information processing device 100 according to an embodiment of this disclosure;
FIG. 3 is a flowchart illustrating an operation example of the information processing device 100 according to the embodiment of this disclosure;
FIG. 4 is an illustrative diagram illustrating an example of a table stored in an atmosphere analysis table storage unit 141;
FIG. 5 is an illustrative diagram illustrating a functional configuration example of an information processing device 100 according to an embodiment of this disclosure;
FIG. 6 is a flowchart illustrating an operation example of the information processing device 100 according to an embodiment of this disclosure;
FIG. 7 is an illustrative diagram illustrating an example of a relationship between an atmosphere of a space around the information processing device 100 and music data to be reproduced;
FIG. 8 is an illustrative diagram illustrating an example of a relationship between an atmosphere of a space around the information processing device 100 and music data to be reproduced;
FIG. 9 is an illustrative diagram illustrating an example of a relationship between an atmosphere of a space around the information processing device 100 and music data to be reproduced;
FIG. 10 is an illustrative diagram illustrating a functional configuration example of an information processing device 100 according to an embodiment of this disclosure;
FIG. 11 is a flowchart illustrating an operation example of the information processing device 100 according to an embodiment of this disclosure;
FIG. 12 is an illustrative diagram illustrating an example of a relationship between an atmosphere of a space around the information processing device 100 and advice to be presented; and
FIG. 13 is an illustrative diagram illustrating a hardware configuration example of the information processing device 100 according to an embodiment of this disclosure.

### DETAILED DESCRIPTION

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, a description will be given in the following order.
<1. Embodiments of this disclosure>
   [Overview of embodiments of this disclosure]
   [Functional configuration example of information processing device]
   [Operation example of information processing device]
<2. Hardware configuration example>
<3. Conclusion>

### <1. Embodiments of this disclosure>

### [Overview of embodiments of this disclosure]

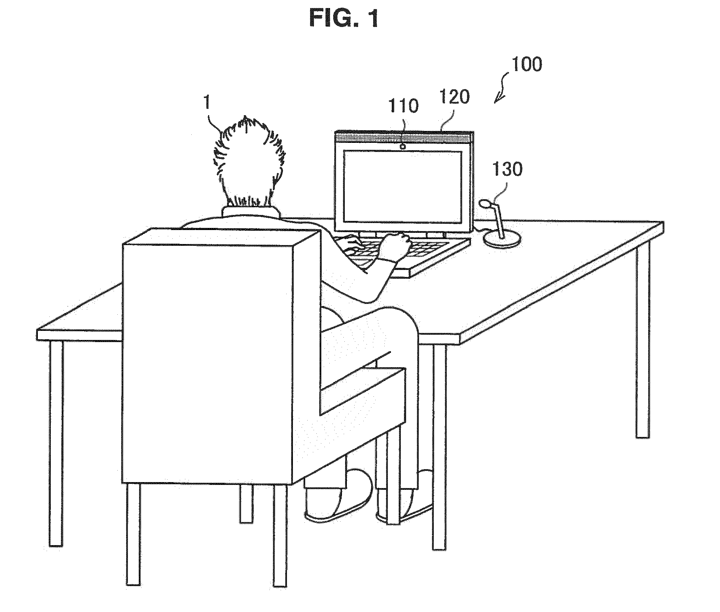

First, an overview of embodiments of this disclosure will be described with reference to the drawings. FIG. 1 is an illustrative diagram illustrating an overview of an embodiment of this disclosure. Hereinafter, an overview of an embodiment of this disclosure will be described with reference to FIG. 1.

An appearance of a user 1 manipulating a notebook type information processing device 100 is illustrated in FIG. 1. Also, an imaging unit 110 for imaging the front of the information processing device 100, a sensing sensor 120 for sensing the front of the information processing device 100, and a microphone 130 for receiving sound around the information processing device 100 are connected to the information processing device 100.

The information processing device 100 according to an embodiment of this disclosure analyzes an atmosphere of a space in which the information processing device 100 is placed using data acquired from the imaging unit 110, the sensor 120 and the microphone 130. Also, the information processing device 100 executes an appropriate process according to the atmosphere of the space in which the information processing device 100 is placed, which has been determined by the analysis.

Examples of the appropriate process according to the atmosphere of the space in which the information processing device 100 according to an embodiment of this disclosure is placed include selection of a musical piece according to the atmosphere, control of a function of the information processing device 100 according to the atmosphere, and presentation of advice according to the atmosphere to the user 1.

Further, the information processing device 100 according to an embodiment of this disclosure may also analyze the atmosphere of the space in which the information processing device 100 is placed using information of a use situation of the information processing device 100, in addition to the data acquired from the imaging unit 110, the sensor 120 and the microphone 130. Examples of the information of the use situation of the information processing device 100 include information of a time after the information processing device 100 starts up, and information of an application executed in the information processing device 100. An example of the information of the application executed in the information processing device 100 may include information of a category of the application executed in the information processing device 100, such as information indicating whether the application is an application used for business or an application used for a hobby.

The overview of the embodiment of this disclosure has been described above with reference to FIG. 1. Next, a functional configuration example of the information processing device 100 according to an embodiment of this disclosure will be described.

### [Functional configuration example of information processing device]

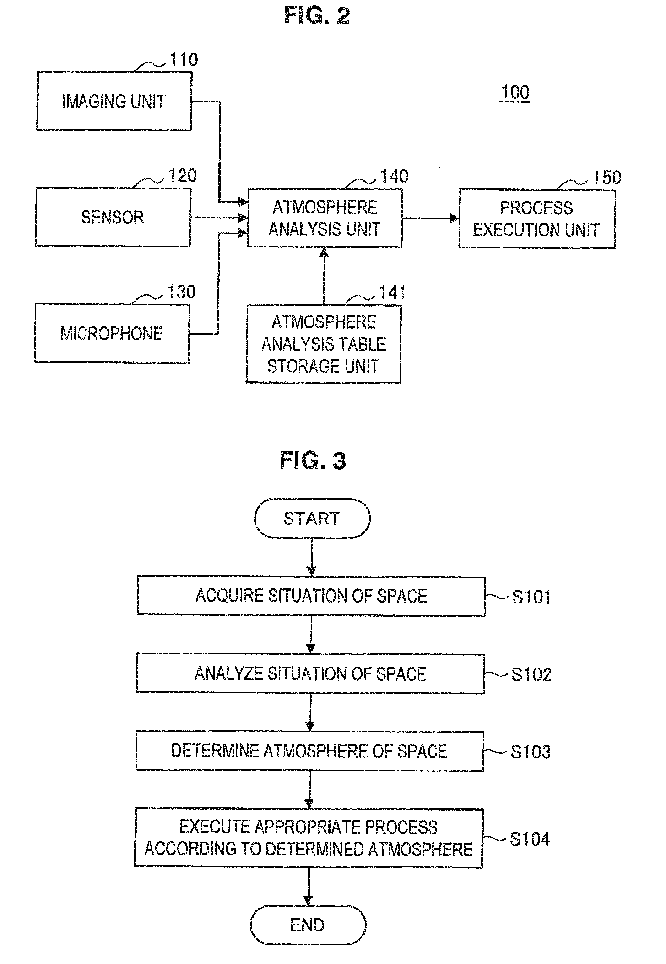

FIG. 2 is an illustrative diagram illustrating a functional configuration example of the information processing device 100 according to an embodiment of this disclosure. Hereinafter, a functional configuration example of the information processing device 100 according to an embodiment of this disclosure will be described with reference to FIG. 2.

The information processing device 100 according to an embodiment of this disclosure includes the imaging unit 110, the sensor 120, the microphone 130, an atmosphere analysis unit 140, an atmosphere analysis table storage unit 141, and a process execution unit 150, as illustrated in FIG. 2.

The imaging unit 110 images the front of the information processing device 100 as a moving image, as illustrated in FIG. 1. The imaging unit 110 is provided, particularly, to image an appearance of the user manipulating the information processing device 100 or a state of a room in which the information processing device 100 is placed. The moving image captured by the imaging unit 110 is sent to the atmosphere analysis unit 140.

The sensor 120 senses the front of the information processing device 100, as illustrated in FIG. 1. For the sensor 120, a depth sensor may be used, for example. When the depth sensor is used as the sensor 120, the sensor 120 may acquire information of a distance between the sensor 120 and the user. Further, when the depth sensor is used as the sensor 120, the sensor 120 may detect presence of a plurality of persons or may acquire information of a distance between persons when there are a plurality of persons. Further, an illuminance sensor may be used as the sensor 120, for example. As the illuminance sensor is used as the sensor 120, the sensor 120 may acquire information of brightness of the space in which the information processing device 100 is placed. The information obtained by the sensor 120 performing sensing is sent to the atmosphere analysis unit 140.

The microphone 130 receives sound around the information processing device 100, as illustrated in FIG. 1. Information of the sound collected by the microphone 130 is sent to the atmosphere analysis unit 140.

The atmosphere analysis unit 140 analyzes the atmosphere of the space in which the information processing device 100 is placed using the information sent from the imaging unit 110, the sensor 120 and the microphone 130. The atmosphere analysis unit 140 obtains information for determining the atmosphere of the space in which the information processing device 100 is placed, from the information sent from the imaging unit 110, the sensor 120 and the microphone 130. Also, the atmosphere analysis unit 140 determines the atmosphere from the information for determining the atmosphere of the space in which the information processing device 100 is placed.

Examples of the information for determining the atmosphere of the space in which the information processing device 100 is placed include a number persons around the information processing device 100, sex and age of such a person, an expression of the person, content of an operation performed by the person, a distance between persons when there are a plurality of persons, and sound of the space. The atmosphere analysis unit 140 may obtain the number of persons from the data acquired by the imaging unit 110 or the sensor 120 and may obtain the sex, the age, the expression, and the operation by performing image analysis on the data acquired by the imaging unit 110. Further, the atmosphere analysis unit 140 can obtain information indicating whether the space is bustling or quiet from the data acquired by the microphone 130.

The atmosphere analysis unit 140 may execute a face authentication process for the image captured by the imaging unit 110. The atmosphere analysis unit 140 may identify a person who is a target of the acquired information by executing the face authentication process for the image captured by the imaging unit 110.

The atmosphere analysis unit 140 itself holds information for deciding the information for determining the atmosphere of the space from the information sent from the imaging unit 110, the sensor 120 and the microphone 130, refers to information held in the information processing device 100, or refers to information from a device external to the information processing device 100 via a network or the like.

For example, in order to determine the atmosphere from the information for determining the atmosphere of the space in which the information processing device 100 is placed, the atmosphere analysis unit 140, for example, refers to a table in which information of an atmosphere from which such information can be taken has been stored. In this embodiment, the atmosphere analysis unit 140 refers to information stored in the atmosphere analysis table storage unit 141 when determining the atmosphere. The atmosphere analysis table storage unit 141 stores a table in which a correspondence relationship between the information for determining the atmosphere of the space in which the information processing device 100 is placed and the atmosphere from which the information can be taken has been defined. An example of the table stored in the atmosphere analysis table storage unit 141 will be described below.

The process execution unit 150 executes an appropriate process according to the atmosphere of the space in which the information processing device 100 is placed, which has been determined by the atmosphere analysis unit 140. Examples of the appropriate process according to the atmosphere of the space executed by the process execution unit 150 include selection of a musical piece according to the atmosphere, control of a function of the information processing device 100 according to the atmosphere, and presentation of advice according to the atmosphere to the user 1, as described above.

The information processing device 100 according to an embodiment of this disclosure can automatically determine the atmosphere of the space around the information processing device 100, select the appropriate process according to the determined atmosphere, and execute the appropriate process through the configuration illustrated in FIG. 2. As the information processing device 100 according to an embodiment of this disclosure selects and executes the appropriate process in this way, the user of the information processing device 100 can omit efforts of manually finding desired data, a process or the like.

The functional configuration example of the information processing device 100 according to an embodiment of this disclosure has been described above with reference to FIG. 2. Next, an operation example of the information processing device 100 according to an embodiment of this disclosure will be described.

### [Operation example of information processing device]

FIG. 3 is a flowchart illustrating an operation example of the information processing device 100 according to an embodiment of this disclosure. The operation example of the information processing device 100 according to an embodiment of this disclosure when the information processing device 100 determines an atmosphere of an ambient space and executes an appropriate process according to this atmosphere is illustrated in FIG. 3. Hereinafter, the operation example of the information processing device 100 according to an embodiment of this disclosure will be described with reference to FIG. 3.

The information processing device 100 according to an embodiment of this disclosure first acquires a situation of the ambient space when determining the atmosphere of the ambient space and executing the appropriate process according to the atmosphere (step S101). For example, the imaging unit 110, the sensor 120, and the microphone 130 execute the acquisition of the situation of the space in step S101. The imaging unit 110 images the front of the information processing device 100, the sensor 120 senses the front of the information processing device 100, and the microphone 130 receives sound around the information processing device 100.

When the information processing device 100 has acquired the situation of the ambient space in step S101 described above, the information processing device 100 analyzes the situation of the space from the acquired information (step S102). For example, the atmosphere analysis unit 140 executes the analysis of the situation of the space in step S102. When analyzing the situation of the space, the atmosphere analysis unit 140 obtains the information for determining the atmosphere of the space in which the information processing device 100 is placed and refers to the table stored in the atmosphere analysis table storage unit 141 using the information.

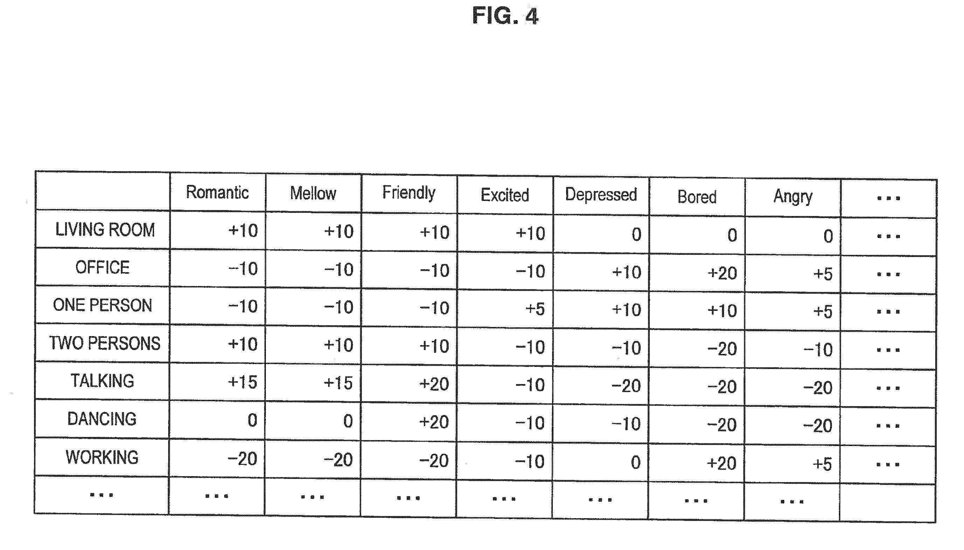

FIG. 4 is an illustrative diagram illustrating an example of the table stored in the atmosphere analysis table memory unit 141 of the information processing device 100 according to an embodiment of this disclosure.

For example, the atmosphere analysis unit 140 is assumed to determine that the space in which the information processing device 100 is placed is a living room from the situation of the space around the information processing device 100 acquired in step S101. If the space in which the information processing device 100 is placed is the living room, a definition is included in the atmosphere analysis table storage unit 141 to increase scores of "romantic," "mellow," "friendly" and "excited" by 10 points in an atmosphere determined in advance. Therefore, when the space in which the information processing device 100 is placed is determined to be the living room, the atmosphere analysis unit 140 increases the scores of "romantic," "mellow," "friendly" and "excited" by 10 points.

Further, for example, the atmosphere analysis unit 140 is assumed to have determined that the space in which the information processing device 100 is placed is an office from the situation of the space around the information processing device 100 acquired in step S101. If the space in which the information processing device 100 is placed is an office, a definition is included in the atmosphere analysis table storage unit 141 to decrease the scores of "romantic," "mellow," "friendly" and "excited" by 10 points and increase a score of "depressed" by 10 points, a score of "bored" by 20 points, and a score of "angry" by 5 points in the atmospheres determined in advance. Accordingly, when the space in which the information processing device 100 is placed is determined to be the office, the atmosphere analysis unit 140 increases or decreases the score of each atmosphere based on the table illustrated in FIG. 4.

In the table illustrated in FIG. 4, scores increasing or decreasing according to the number of persons in the space in which the information processing device 100 is placed, and information indicating what the person in the space in which the information processing device 100 is placed is doing, in addition to the information of the space in which the information processing device 100 is placed, are defined. The atmosphere analysis unit 140 obtains the score for each atmosphere determined in advance with reference to the table illustrated in FIG. 4.

Further, when analyzing the situation of the space in which the information processing device 100 is placed, the atmosphere analysis unit 140 may also use information on date and time at that time point or information intended by the user.

If the situation of the space in which the information processing device 100 is placed is analyzed in step S102 described above, then the information processing device 100 determines the atmosphere of the space in which the information processing device 100 is placed from a result of the analysis (step S103). For example, the atmosphere analysis unit 140 executes the determination of the atmosphere in step S103. The atmosphere analysis unit 140 determines an atmosphere having a highest score among all atmospheres determined in advance as a result of the analysis in step S102 described above, to be the atmosphere of the space in which the information processing device 100 is placed.

When the atmosphere of the space in which the information processing device 100 is placed is determined in step S103 described above, the information processing device 100 selects and executes the most suitable process according to the determined atmosphere (step S104). For example, the process execution unit 150 executes the selection and the execution of the most suitable process in step S104. Further, when selecting and executing the most suitable process, the process execution unit 150 may use information of the space in which the information processing device 100 is placed, the information on date and time at that time point, and information intended by the user. The process execution unit 150 may select and execute different processes even in the same atmospheres by using the information.

The information processing device 100 according to an embodiment of this disclosure can automatically determine the atmosphere of the space around the information processing device 100 and select and execute the appropriate process according to the determined atmosphere by performing the operation as illustrated in FIG. 3.

Further, the table illustrated in FIG. 4 is only an example, and it is understood that the atmospheres and the increasing or decreasing value of the scores are not limited to such an example.

The operation example of the information processing device 100 according to an embodiment of this disclosure has been described above with reference to FIG. 3. Next, the operation of the information processing device 100 according to an embodiment of this disclosure will be described in greater detail.

First, the operation of the information processing device 100 according to an embodiment of this disclosure will be described in greater detail. Here, an example of the appropriate process according to the atmosphere includes a process of reproducing a musical piece according to the atmosphere

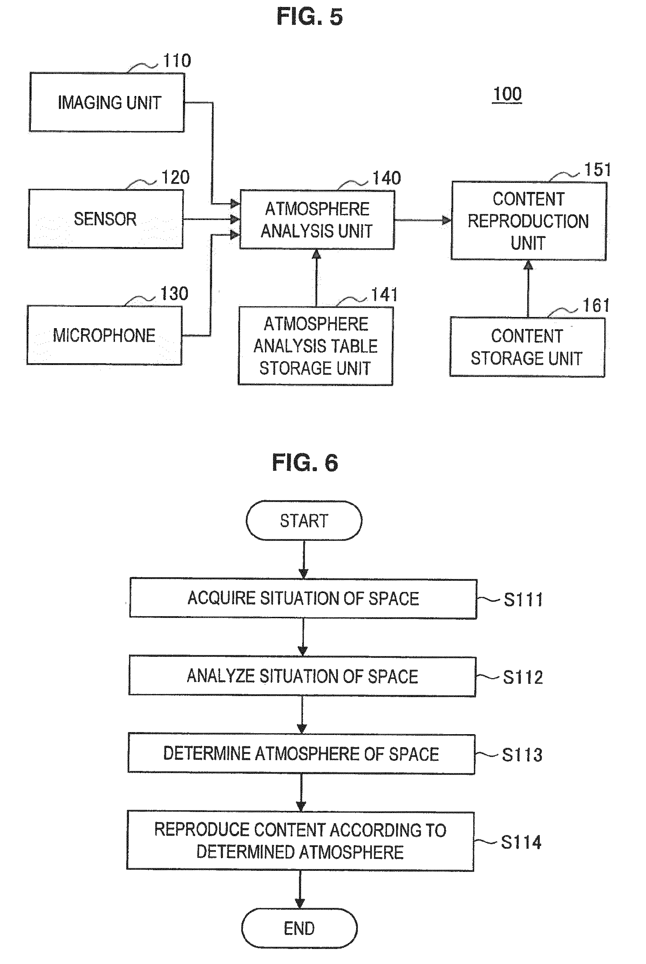

FIG. 5 is an illustrative diagram illustrating a functional configuration example of the information processing device 100 according to an embodiment of this disclosure. Hereinafter, the functional configuration example of the information processing device 100 according to an embodiment of this disclosure will be described with reference to FIG. 5.

In the functional configuration example of the information processing device 100 according to an embodiment of this disclosure illustrated in FIG. 5, the process execution unit 150 is replaced with a content reproduction unit 151, unlike the functional configuration example of the information processing device 100 illustrated in FIG. 2. In other words, in FIG. 5, the content reproduction unit 151 is shown as an example of the process execution unit 150 illustrated in FIG. 2.

The content reproduction unit 151 acquires music data stored in a content storage unit 161 and reproduces the acquired music data. Here, the content reproduction unit 151 selects, from the content storage unit 161, the musical piece according to the atmosphere of the space in which the information processing device 100 is placed, which has been determined by the atmosphere analysis unit 140, and reproduces the musical piece.

The content storage unit 161 stores the music data. Information on a melody of the music data is given to the music data stored in the content storage unit 161 through analysis in advance as metadata. Determination of the melody of the music data through the analysis of the music data is not limited to a specific method.

For example, in the information processing device 100 according to an embodiment of this disclosure illustrated in FIG. 5, for example, when the atmosphere analysis unit 140 determines the atmosphere of the space in which the information processing device 100 is placed to be "romantic" and "mellow," the content reproduction unit 151 selects the music data having a calm melody from among the music data stored in the content storage unit 161 and reproduces the music data. Further, for example, when the atmosphere analysis unit 140 determines the atmosphere of the space in which the information processing device 100 is placed, to be "friendly," the content reproduction unit 151 selects the music data having a light melody from among the music data stored in the content storage unit 161 and reproduces the music data.

Thus, the information processing device 100 according to an embodiment of this disclosure can select and reproduce appropriate music data using the content reproduction unit 151 according to the atmosphere determined by the atmosphere analysis unit 140. In other words, the information processing device 100 according to an embodiment of this disclosure can execute the appropriate process according to the atmosphere determined by the atmosphere analysis unit 140.

The functional configuration example of the information processing device 100 according to an embodiment of this disclosure has been described above with reference to FIG. 5. Next, an operation example of the information processing device 100 according to an embodiment of this disclosure will be described.

FIG. 6 is a flowchart illustrating an operation example of the information processing device 100 according to an embodiment of this disclosure. An operation example of the information processing device 100 according to an embodiment of this disclosure when the information processing device 100 determines the atmosphere of the ambient space, selects the appropriate music data according to the determined atmosphere, and reproduces music data is illustrated in FIG. 6. Hereinafter, the operation example of the information processing device 100 according to an embodiment of this disclosure will be described with reference to FIG. 6.

When the information processing device 100 according to an embodiment of this disclosure determines the atmosphere of the ambient space and executes the appropriate process according to the atmosphere, the information processing device 100 first acquires a situation of the ambient space (step S111). If the information processing device 100 acquires the situation of the ambient space in step S111, then the information processing device 100 analyzes the situation of the space from the acquired information (step S112). Also, if the information processing device 100 analyzes the situation of the space in which the information processing device 100 is placed in step S112, then the information processing device 100 determines the atmosphere of the space in which the information processing device 100 is placed from a result of the analysis (step S113).

Since the process in steps S111 to S113 is the same as the process in steps S101 to S103 illustrated in FIG. 3, a detailed description thereof is omitted.

If the information processing device 100 determines the atmosphere of the space in which the information processing device 100 is placed in step S113 described above, the information processing device 100 selects the most suitable music data according to the determined atmosphere and reproduces the music data (step S114). For example, the content reproduction unit 151 executes the selection and the reproduction of the most suitable music data in step S114.

When selecting and reproducing the most suitable music data, the content reproduction unit 151 may refer to content of music data reproduced within a recent predetermined period. For example, if music data of a specific singer was reproduced most often within a recent predetermined period, the content reproduction unit 151 may select music data suitable for the atmosphere from the music data of the singer stored in the content storage unit 161.

The information processing device 100 according to an embodiment of this disclosure can automatically determine the atmosphere of the space around the information processing device 100, select the appropriate music data according to the determined atmosphere, and reproduce the music data, by performing the operation as illustrated in FIG. 6.

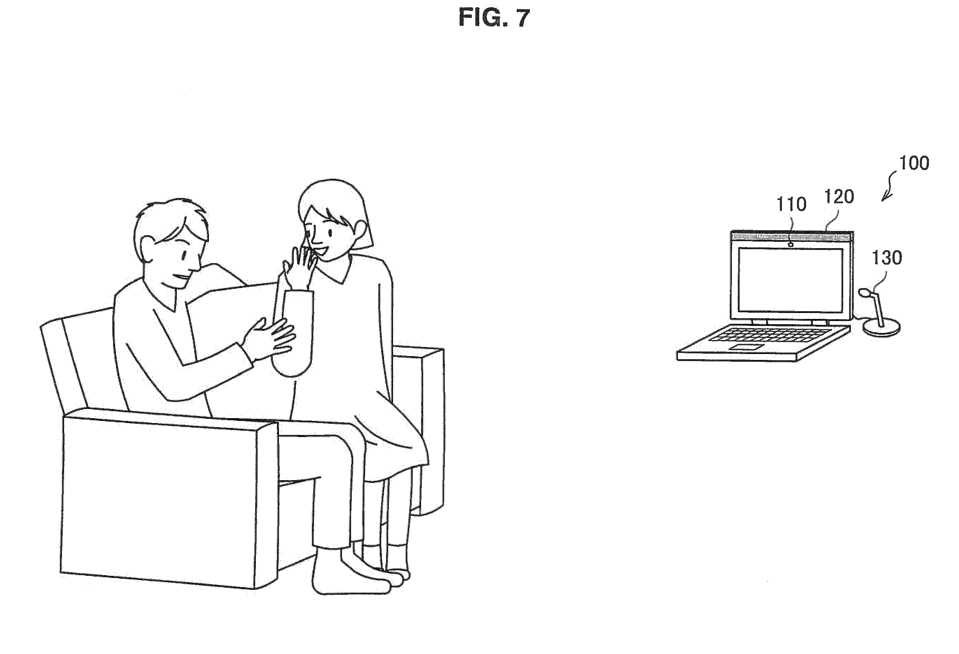

Here, an example of a relationship between the atmosphere of the space around the information processing device 100 according to an embodiment of this disclosure and the music data to be reproduced will be described. FIGS. 7 to 9 are illustrative diagrams illustrating the example of a relationship between the atmosphere of the space around the information processing device 100 and the music data to be reproduced.

For example, a case in which two of a man and a woman are talking in the space in which the information processing device 100 according to an embodiment of this disclosure is placed as illustrated in FIG. 7 is considered. Various atmospheres are considered as the atmosphere of this space, but the atmosphere analysis unit 140 is assumed to have acquired the following situation as a result of analyzing the information acquired from the imaging unit 110, the sensor 120 and the microphone 130.
Environment: Living room, dim illumination
Number of persons: 2
Sex and age: Female/20 to 30 years old, male/20 to 30 years old
Situation: Talking/facing each other/sitting on sofa/touching arm
Content being reproduced: Rock and pop
Date and time: Friday/August/21:13
Season: Summer

When the atmosphere analysis unit 140 acquires such a situation, the atmosphere analysis unit 140 determines the atmosphere of the space in which the information processing device 100 is placed from the above information. For example, as a result of having referred to the table stored in the atmosphere analysis table storage unit 141, the atmosphere analysis unit 140 is assumed to have analyzed the atmosphere as follows. Further, hereinafter, the atmosphere is shown in percentage converted from the score.
Romantic: 40%
Mellow: 20%
Friendly: 20%
Excited: 10%
Depressed: 5%
Bored: 5%
Angry: 0%

Since the atmosphere is most likely to be "romantic" as a result of the analysis, the atmosphere analysis unit 140 determines the atmosphere to be "romantic." Also, the content reproduction unit 151 acquires content according to the atmosphere "romantic" from the content storage unit 161 and reproduces the content. Here, the content reproduction unit 151 may acquire the content according to the atmosphere "romantic" from the content storage unit 161 after referring to content of music data reproduced within a recent predetermined period, and reproduce the content.

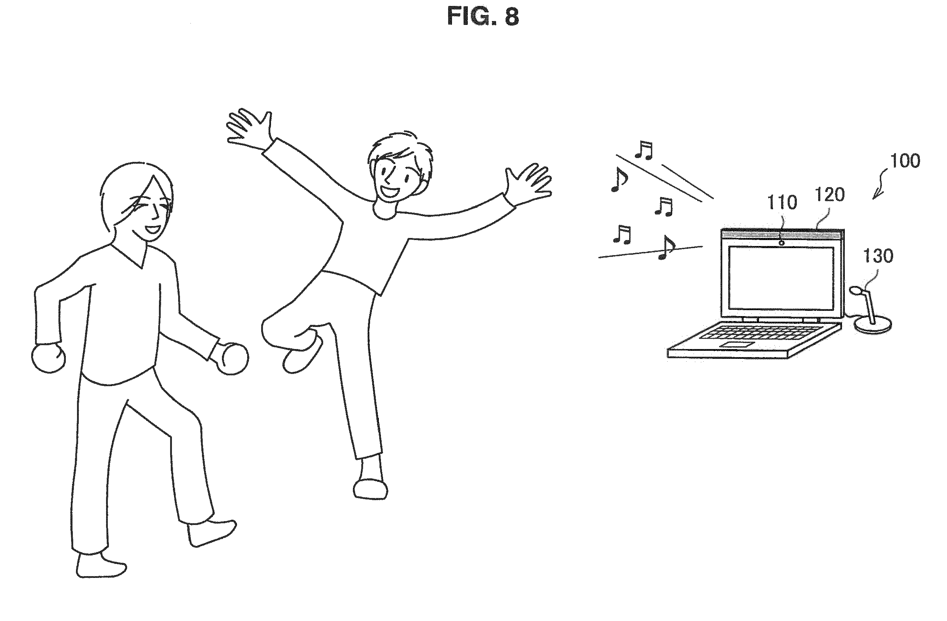

Another example is shown. For example, a case in which two men are dancing in the space in which the information processing device 100 according to an embodiment of this disclosure is placed as illustrated in FIG. 8 is considered. Various atmospheres are considered as the atmosphere of this space, but the atmosphere analysis unit 140 is assumed to have acquired the following situation as a result of having analyzed the information acquired from the imaging unit 110, the sensor 120 and the microphone 130.
Environment: Living room, normal illumination
Number of persons: 2
Sex and age: Male/15 to 20 years old, male/20 to 25 years old
Situation: Standing/moving around (dancing)/singing loudly/pretending to play musical instrument
Content being reproduced: Rock and metal
Date and time: Saturday/August/18:57
Season: Summer

When the atmosphere analysis unit 140 acquires such a situation, the atmosphere analysis unit 140 determines the atmosphere of the space in which the information processing device 100 is placed from the above information. For example, as a result of referring to the table stored in the atmosphere analysis table storage unit 141, the atmosphere analysis unit 140 is assumed to have analyzed the atmosphere as follows. Further, hereinafter, the atmosphere is shown in percentage converted from the score.
Party: 50%
Excited: 20%
Angry: 20%
Fighting: 10%
Relaxing: 0%
Depressed: 0%

Since the atmosphere is most likely to be "party" as a result of the analysis, the atmosphere analysis unit 140 determines the atmosphere to be "party." Also, the content reproduction unit 151 acquires content according to the atmosphere "party" from the content storage unit 161 and reproduces the content. Here, the content reproduction unit 151 may acquire the content according to the atmosphere "party" from the content storage unit 161 after referring to content of music data reproduced within a recent predetermined period, and reproduce the content, as described above.

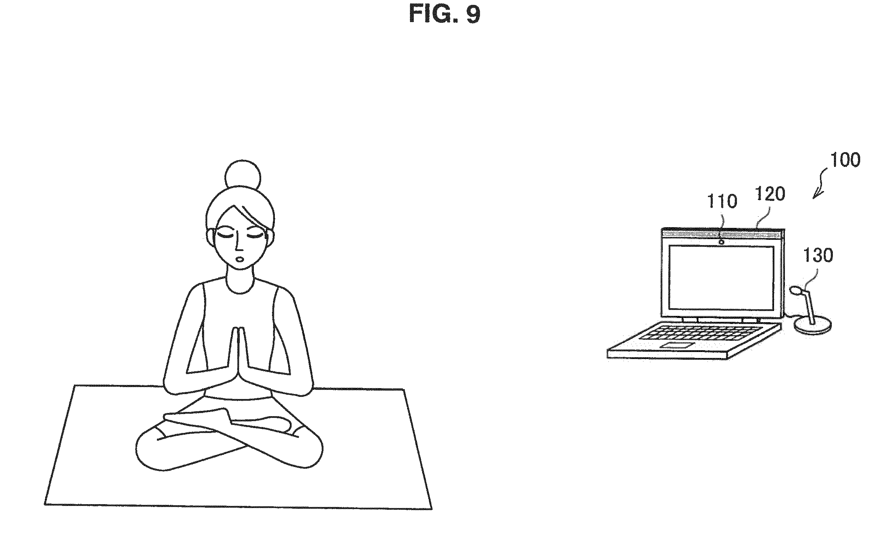

Further, another example is shown. For example, a case in which a woman sits still in the space in which the information processing device 100 according to an embodiment of this disclosure is placed, as illustrated in FIG. 9 is considered. Various atmospheres are considered as the atmosphere of this space, but the atmosphere analysis unit 140 is assumed to have acquired the following situation as a result of analyzing the information acquired from the imaging unit 110, the sensor 120 and the microphone 130.
Environment: Living room, natural illumination
Number of persons: 1
Sex and age: Female
Situation: Sitting/sitting still/lotus position/eyes closed
Content being reproduced: Relaxing music including sound of nature/jazz and pop/female artist
Date and time: Saturday/August/08:01
Season: Summer

If the atmosphere analysis unit 140 acquires such a situation, the atmosphere analysis unit 140 determines the atmosphere of the space in which the information processing device 100 is placed from the information. For example, as a result of referring to the table stored in the atmosphere analysis table storage unit 141, the atmosphere analysis unit 140 is assumed to have analyzed the atmosphere as follows. Further, hereinafter, the atmosphere is shown in percentage converted from the score.
Meditation: 50%
Relaxing: 20%
Calm: 10%
Eating: 10%
Depressed: 5%
Angry: 5%

Since the atmosphere is most likely to be "meditation" as a result of the analysis, the atmosphere analysis unit 140 determines the atmosphere to be "meditation." Also, the content reproduction unit 151 acquires content according to the atmosphere "meditation" from the content storage unit 161, and reproduces the content. Here, the content reproduction unit 151 may acquire the content according to the atmosphere "meditation" from the content storage unit 161 and reproduce the content after referring to content of music data reproduced within a recent predetermined period, as described above.

Further, the content reproduction unit 151 may decrease a volume at the time of the reproduction according to the atmosphere "meditation." Further, since the atmosphere analysis unit 140 determines the atmosphere to be "meditation," the information processing device 100 may execute control to decrease luminance of a backlight of a display displaying an image.

Thus, the information processing device 100 according to an embodiment of this disclosure can determine the atmosphere of the space from the information acquired from the imaging unit 110, the sensor 120 and the microphone 130, and reproduce the music data according to the determined atmosphere.

The information processing device 100 according to an embodiment of this disclosure is capable of reproducing the music data according to the atmosphere of the space as described above, but this disclosure is not limited to such an example. For example, when the information processing device 100 according to an embodiment of this disclosure determines the atmosphere of the space to be negative, the information processing device 100 may select and reproduce music data to change the atmosphere of the space from a negative atmosphere to a positive atmosphere. It is assumed that an example of the negative atmosphere includes "depressed" or "anger" and the information processing device 100 has recognized which atmosphere is negative in advance.

Further, what feeling is positive and what feeling is negative are defined, for example, according to the feeling classification by Robert Plutchik. The information processing device 100 according to an embodiment of this disclosure may hold information on which atmosphere is positive or which atmosphere is negative, which is defined using the feeling classification by Robert Plutchik. Thus, the reproduction of the music data to change the atmosphere of the space from a negative atmosphere to a positive atmosphere is also an example of the process suitable for the space in this disclosure.

Next, an operation of the information processing device 100 according to an embodiment of this disclosure will be described in greater detail. Here, an example of the appropriate process according to the atmosphere includes a process of presenting advice to a user according to the atmosphere.

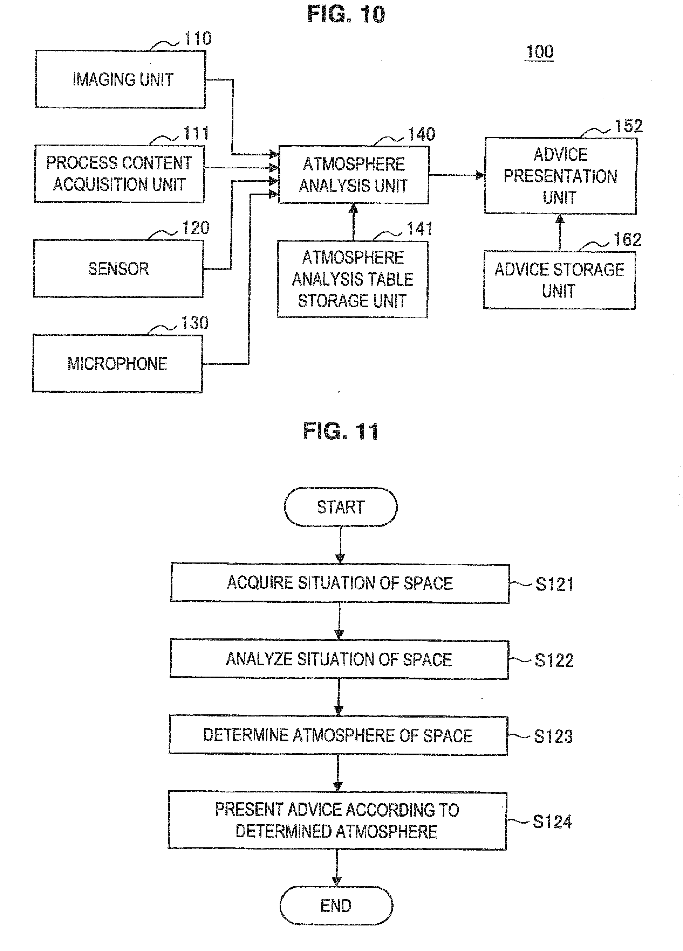

FIG. 10 is an illustrative diagram illustrating a functional configuration example of the information processing device 100 according to an embodiment of this disclosure. Hereinafter, the functional configuration example of the information processing device 100 according to an embodiment of this disclosure will be described with reference to FIG. 10.

In the functional configuration example of the information processing device 100 according to an embodiment of this disclosure illustrated in FIG. 10, the process execution unit 150 is replaced with an advice presentation unit 152, unlike the functional configuration example of the information processing device 100 illustrated in FIG. 2. In other words, in FIG. 10, the advice presentation unit 152 is shown as an example of the process execution unit 150 illustrated in FIG. 2. Further, in the functional configuration example of the information processing device 100 according to an embodiment of this disclosure illustrated in FIG. 10, a process content acquisition unit 111 is newly added, unlike the functional configuration example of the information processing device 100 illustrated in FIG. 2.

The process content acquisition unit 111 acquires content of a process executed in the information processing device 100. For example, a startup time of the information processing device 100, an application executed in the information processing device 100, a type (category) of application, luminance of a display of the information processing device 100, volume of a speaker of the information processing device 100, and the like are acquired by the process content acquisition unit 111 as the content of the process executed in the information processing device 100.

The advice presentation unit 152 acquires advice suitable for the atmosphere from advice information for a user of the information processing device 100, which has been stored in an advice storage unit 162, and presents the acquired advice to the user. The advice storage unit 162 stores the advice information for the user of the information processing device 100. The advice information stored in the advice storage unit 162 includes various pieces of advice information and is not limited to specific advice information, but for example, information for recommending a user to take a break or suggesting an application most suitable for a process that the user is performing using the information processing device 100 may be stored in the advice storage unit 162.

Thus, the information processing device 100 according to an embodiment of this disclosure can acquire the advice using the advice presentation unit 152 according to the atmosphere determined by the atmosphere analysis unit 140 and present the advice to the user of the information processing device 100. In other words, the information processing device 100 according to an embodiment of this disclosure can execute an appropriate process according to the atmosphere determined by the atmosphere analysis unit 140.

The functional configuration example of the information processing device 100 according to an embodiment of this disclosure has been described above with reference to FIG. 10. Next, an operation example of the information processing device 100 according to an embodiment of this disclosure will be described.

FIG. 11 is a flowchart illustrating an operation example of the information processing device 100 according to an embodiment of this disclosure. The operation example of the information processing device 100 according to an embodiment of this disclosure when the information processing device 100 determines the atmosphere of the ambient space and presents appropriate advice to the user of the information processing device 100 according to the atmosphere is illustrated in FIG. 11. Hereinafter, the operation example of the information processing device 100 according to an embodiment of this disclosure will be described with reference to FIG. 11.

When the information processing device 100 according to an embodiment of this disclosure determines an atmosphere of the ambient space and executes an appropriate process according to the atmosphere, the information processing device 100 first acquires a situation of the ambient space (step S121). If the information processing device 100 acquires the situation of the ambient space in step S121, then the information processing device 100 analyzes the situation of the space from the acquired information (step S122). Also, if the information processing device 100 analyzes the situation of the space in which the information processing device 100 is placed in step S112, then the information processing device 100 determines an atmosphere of the space in which the information processing device 100 is placed from a result of the analysis (step S123).

Since the process in steps S121 to S123 is the same as the process of steps S101 to S103 illustrated in FIG. 3, a detailed description thereof is omitted.

If the information processing device 100 determines the atmosphere of the space in which the information processing device 100 is placed in step S123 described above, the information processing device 100 presents the most suitable advice according to the determined atmosphere to the user of the information processing device 100 (step S124). For example, the advice presentation unit 152 executes the selection and the presentation of the most suitable advice in step S124.

The information processing device 100 according to an embodiment of this disclosure can automatically determine the atmosphere of the space around the information processing device 100, select the appropriate advice according to the determined atmosphere, and present the selected advice to the user of the information processing device 100, by performing the operation as shown to FIG. 11.

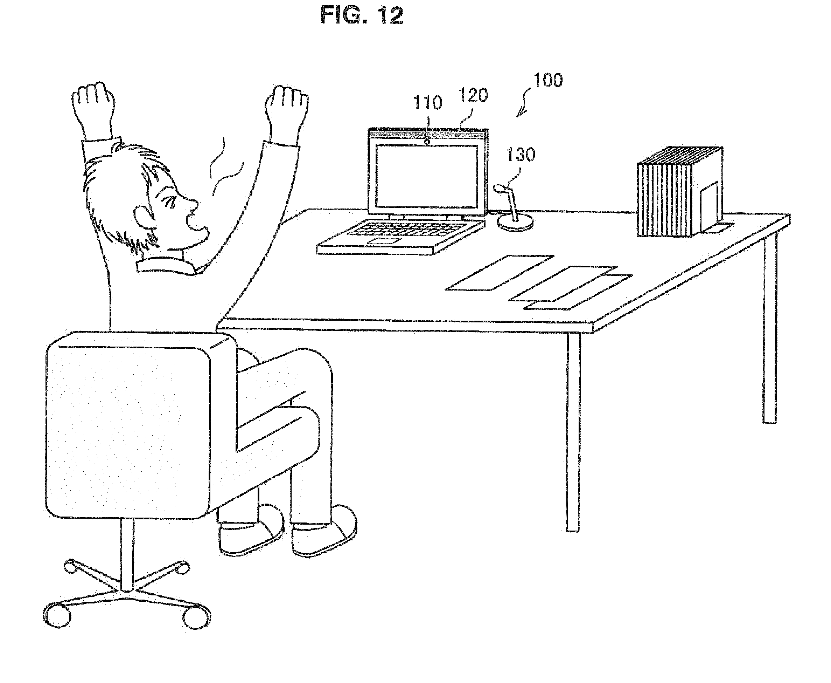

Here, an example of a relationship between the atmosphere of the space around the information processing device 100 according to an embodiment of this disclosure and the advice to be presented will be described. FIG. 12 is an illustrative diagram illustrating the example of the relationship between the atmosphere of the space around the information processing device 100 and the advice to be presented.

For example, a case in which a man is yawning while stretching during work in the space in which the information processing device 100 according to an embodiment of this disclosure is placed as illustrated in FIG. 12 is considered. Various atmospheres are considered as the atmosphere of this space, but the atmosphere analysis unit 140 is assumed to have acquired the following situation as a result of analyzing the information acquired from the imaging unit 110, the process content acquisition unit 111, the sensor 120 and the microphone 130.
Environment: Office, normal illumination
Number of persons: 1
Sex and age: Male
Situation: Sitting/stretching/looking tired/yawning
Content being reproduced: None
Application being executed: Spreadsheet software
Date and time: Monday/August/14:15
Season: Summer

When the atmosphere analysis unit 140 acquires such a situation, the atmosphere analysis unit 140 determines an atmosphere of the space in which the information processing device 100 is placed based on the above information. For example, as a result of referring to the table stored in the atmosphere analysis table storage unit 141, the atmosphere analysis unit 140 is assumed to have analyzed the atmosphere as follows. Further, hereinafter, the atmosphere is shown in percentage converted from the score.
Sleepy: 60%
Working: 20%
Calm: 20%

Since the atmosphere is most likely to be "sleepy" as a result of the analysis, the atmosphere analysis unit 140 determines the atmosphere to be "sleepy." Also, the advice presentation unit 152 acquires advice according to the atmosphere "sleepy" from the advice storage unit 162 and presents the advice to the man. For example, the advice presentation unit 152 increases luminance of a backlight of a display for waking from sleep or displays a message "Would you like to take a break?" on the display. Further, when this man is extremely sleepy, the advice presentation unit 152 may advise the man to take a nap and set an alarm for waking.

Thus, the information processing device 100 according to an embodiment of this disclosure can acquire the advice using the advice presentation unit 152 according to the atmosphere determined by the atmosphere analysis unit 140 and present the advice to the user of the information processing device 100, by executing the operation as shown to FIG. 11. In other words, the information processing device 100 according to an embodiment of this disclosure can execute an appropriate process according to the atmosphere determined by the atmosphere analysis unit 140.

While the form in which the imaging unit 110, the sensor 120 and the microphone 130 are included in the information processing device 100 has been shown in the embodiment described above, this disclosure is not limited to such an example. In other words, a form in which at least one of the imaging unit 110, the sensor 120 and the microphone 130 is wiredly or wirelessly connected to the information processing device 100 may be used.

Further, while the process of determining the atmosphere of the space in which the information processing device 100 is placed has been shown in the embodiment described above, the information processing device 100 may be placed in a room different from a room in which the imaging unit 110, the sensor 120 and the microphone 130 are placed. In other words, the imaging unit 110, the sensor 120 and the microphone 130 may be wiredly or wirelessly connected to the information processing device 100, and the information processing device 100 placed in the room different from the room in which the imaging unit 110, the sensor 120 and the microphone 130 are placed may analyze the atmosphere.

Thus, the information processing device 100 according to an embodiment of this disclosure has determined the atmosphere of the space in which the information processing device 100 is placed from the information acquired by the imaging unit 110, the sensor 120 and the microphone 130, temporal information at a time point at which the imaging unit 110, the sensor 120 and the microphone 130 have acquired the information, or the like. The information processing device 100 according to an embodiment of this disclosure may take statistics of the information of the atmosphere determined in this way. For example, there is technology, called a so-called life log, for sequentially recording content of processes executed in the information processing device 100 by the user of the information processing device 100, but the information processing device 100 may also record the information of the determined atmosphere as the life log.

The information processing device 100 according to an embodiment of this disclosure can recognize which atmosphere is frequent in what day and time slot by recording the information of the determined atmosphere as the life log.

Also, the information processing device 100 according to an embodiment of this disclosure may refer to the information of the atmosphere recorded as the life log when determining the atmosphere from the information acquired by the imaging unit 110, the sensor 120 and the microphone 130 or date, day and time information at a time point at which the imaging unit 110, the sensor 120 and the microphone 130 have acquired the information. The information processing device 100 according to an embodiment of this disclosure can determine the appropriate atmosphere from content of the life log even when an environment in which the information processing device 100 is placed changes, by referring to the information of the atmosphere recorded as the life log.

### <2. Hardware configuration example>

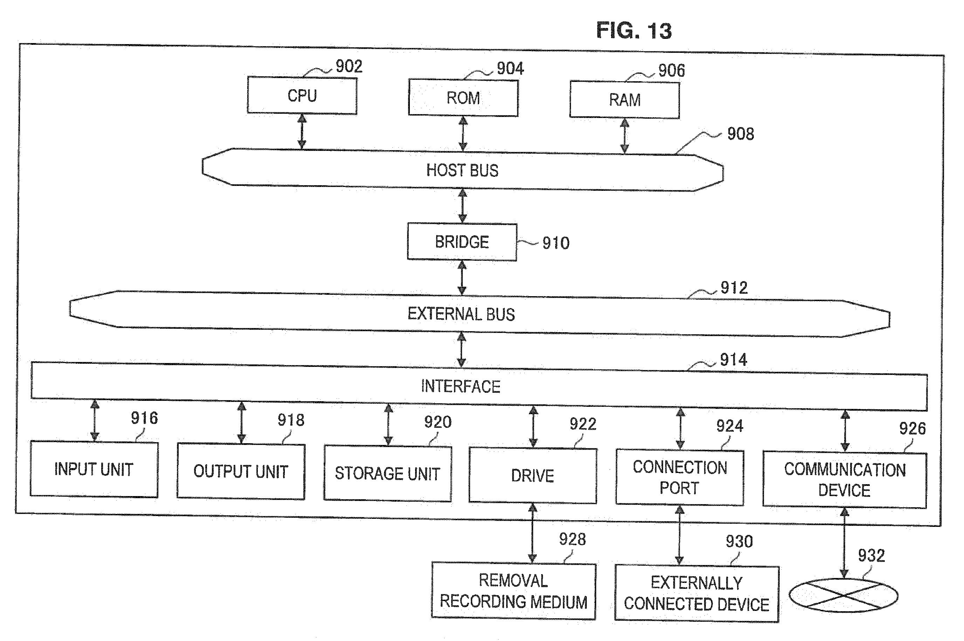

The operation of the information processing device 100 described above can be executed, for example, using a hardware configuration of the information processing device show in FIG. 13. In other words, the operation of the information processing device 100 may be realized by controlling the hardware illustrated in FIG. 13 using a computer program. Further, a form of this hardware is arbitrary. For example, a personal computer, a portable phone, a portable information terminal such as a PHS, a PDA, a smartphone or a tablet terminal, a game console, a contact type or non-contact type IC chip, a contact type or non-contact type IC card, or any kind of household information appliance is included in the hardware. Here, PHS is an abbreviation for Personal Handy-phone System. Further, PDA is an abbreviation for Personal Digital Assistant.

As shown in FIG. 13, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, for example, and controls entire operation or a part of the operation of each structural element based on various programs recorded on the ROM 904, the RAM 906, the storage unit 920, or a removal recording medium 928. The ROM 904 is a device for storing, for example, a program to be loaded on the CPU 902 or data or the like used in an arithmetic operation. The RAM 906 temporarily or perpetually stores, for example, a program to be loaded on the CPU 902 or various parameters or the like arbitrarily changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote control that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. Moreover, the CRT is an abbreviation for Cathode Ray Tube. The LCD is an abbreviation for Liquid Crystal Display. The PDP is an abbreviation for Plasma Display Panel. Also, the ELD is an abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removal recording medium 928 such as a magnetic disk, an optical disk, a magneto-optical disk, or a semiconductor memory, or writes information in the removal recording medium 928. The removal recording medium 928 is, for example, a DVD medium, a Blu-ray medium, an HD-DVD medium, various types of semiconductor storage media, or the like. Of course, the removal recording medium 928 may be, for example, an electronic device or an IC card on which a non-contact IC chip is mounted. The IC is an abbreviation for Integrated Circuit.

The connection port 924 is a port such as an USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. Moreover, the USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for wired or wireless communication. The network 932 connected to the communication unit 926 is configured from a wire-connected or wirelessly connected network, and is the Internet, a home-use LAN, infrared communication, visible light communication, broadcasting, or satellite communication, for example. Moreover, the LAN is an abbreviation for Local Area Network. Also, the WUSB is an abbreviation for Wireless USB. Furthermore, the ADSL is an abbreviation for Asymmetric Digital Subscriber Line.

### <3. Conclusion>

As described above, according to the embodiments of this disclosure, it is possible to provide the information processing device 100 that determines the atmosphere of the space using the captured image, the data sensed by the sensor, the data received by the microphone or the like. As the information processing device 100 according to an embodiment of this disclosure automatically determines the atmosphere of the space using the captured image, the data sensed by the sensor, the data received by the microphone or the like, the information processing device 100 can select and execute the process suitable for the determined atmosphere.

For example, the information processing device 100 according to an embodiment of this disclosure can select and reproduce the music data suitable for the automatically determined atmosphere. Further, the information processing device 100 according to an embodiment of this disclosure can select the advice suitable for the automatically determined atmosphere and present the advice to the user.

Thus, as the information processing device 100 according to an embodiment of this disclosure automatically determines the atmosphere of the space and selects and executes the process suitable for the determined atmosphere, the user of the information processing device 100 can omit efforts of manually finding desired data, a process or the like.

For example, it may not be necessary to chronologically execute respective steps in the processing, which is executed by each apparatus of this specification, in the order described in the sequence diagrams or the flow charts. For example, the respective steps in the processing which is executed by each apparatus may be processed in the order different from the order described in the flow charts, and may also be processed in parallel.

Furthermore, it becomes possible to generate a computer program which makes a hardware device, such as a CPU, a ROM, and a RAM incorporated in each apparatus demonstrate the functions equivalent to the configurations of the above described apparatuses. It becomes also possible to provide a storage medium which stores the computer program. A recording medium may be a transitory recording medium or a non-transitory recording medium In addition, respective functional blocks shown in the functional block diagrams may be constituted from hardware devices, so that a series of processings may be implemented by the hardware devices.

It should be understood by those skilled in the art that various modifications, combinations, sub-combinations and alterations may occur depending on design requirements and other factors insofar as they are within the scope of the appended claims or the equivalents thereof.

Additionally, the present technology may also be configured as below.
(1) An information processing device including: a control device to determine a mood in a space based on sensing data from at least one sensing device placed in the space, and to execute an appropriate operation based on the mood.
(2) The information processing device according to (1), wherein the at least one sensing device includes at least one of an imaging unit, a microphone, a depth sensor or an illuminance sensor.
(3) The information processing device according1 to (1) or (2), wherein the sensing data includes at least one of image data from an imaging unit or audio data from a microphone.
(4) The information processing device according to any one of (1) to (3), wherein the mood is determined by analyzing information of the sensing data indicating geolocation.
(5) The information processing device according to any one of (1) to (4), wherein the mood is determined by analyzing information of the sensing data indicating number of persons.
(6) The information processing device according to any one of (1) to (5), wherein the mood is determined by analyzing information of the sensing data indicating action of at least one person.
(7) The information processing device according to any one of (1) to (6), wherein the mood is determined by analyzing information of the sensing data indicating time.
(8) The information processing device according to any one of (1) to (7), wherein the mood is determined by analyzing information of the sensing data indicating schedule of a user.
(9) The information processing device according to any one of (1) to (8), wherein the execution of an appropriate action includes selection of musical data.
(10) The information processing device according to any one of (1) to (9), wherein the control device controls at least one of volume of reproduction of the musical data or luminance of a display based on the mood.
(11) The information processing device according to any one of (1) to (10), wherein the musical data corresponds to a mood other than the mood determined.
(12) The information processing device according to any one of (1) to (11), wherein the execution of an appropriate action includes presenting advice.
(13) The information processing device according to any one of (1) to (12), wherein the control device includes a processor.
(14) The information processing device according to any one of (1) to (13), wherein the space in which the at least one of the sensing devices is placed is different from a space in which the information processing device is placed.
(15) The information processing device according to any one of (1) to (14), wherein the mood is determined from a table indicating categories of spaces.
(16) The information processing device according to any one of (1) to (15), wherein information indicating the appropriate operation is stored in a memory associated with information indicating a time that the at least one sensing device acquired the sensing data.
(17) The information processing device according to any one of (1) to (16), wherein the sensing data indicates at least one of sex and age of a person, an expression of the person, content of an operation performed by the person, distance between persons when a plurality of persons are in the space or sound of the space.
(18) An information processing system including: a first device configured to determine a mood in a space based on sensing data from at least one sensing device placed in the space; and a second device to execute an appropriate operation based on the mood.
(19) An information processing method including: determining, by a processor, a mood in a space based on sensing data from at least one sensing device placed in the space, and executing an appropriate operation based on the mood.
(20) A recording medium recorded with a program executable by a computer, the program including: determining a mood in a space based on sensing data from at least one sensing device placed in the space, and executing an appropriate operation based on the mood.

Additionally, the present technology may also be configured as below.
(1) An information processing device including: an atmosphere analysis unit that analyzes an atmosphere of a space in which a sensor is installed using data collected by the sensor; and a process execution unit that executes a process suitable for the space based on a result of the analysis of the atmosphere analysis unit.
(2) The information processing device according to (1), wherein the atmosphere analysis unit determines a most appropriate atmosphere from a result of referring to a table using information obtained from the data.
(3) The information processing device according to (1) or (2), wherein the atmosphere analysis unit analyzes the atmosphere of the space in which the sensor is installed based on an activity of a person collected by the sensor.
(4) The information processing device according to (3), wherein the process execution unit executes a process of selecting content in consideration of the atmosphere that the atmosphere analysis unit has analyzed based on the activity of the person.
(5) The information processing device according to any one of (1) to (4), wherein the atmosphere analysis unit analyzes the atmosphere of the space in which the sensor is installed based on a number of persons collected by the sensor.
(6) The information processing device according to (5), wherein the process execution unit executes a process of selecting content in consideration of the atmosphere that the atmosphere analysis unit has analyzed based on the number of persons.
(7) The information processing device according to any one of (1) to (6), wherein the atmosphere analysis unit analyzes the atmosphere of the space in which the sensor is installed based on a distance between persons when presence of a plurality of persons has been confirmed from data collected by the sensor.
(8) The information processing device according to (7), wherein the process execution unit executes a process of selecting content in consideration of the atmosphere that the atmosphere analysis unit has analyzed based on the distance between the persons.
(9) The information processing device according to any one of (1) to (8), wherein the atmosphere analysis unit analyzes the atmosphere of the space in which the sensor is installed, based on talking of persons collected by the sensor.
(10) The information processing device according to (9), wherein the process execution unit executes a process of selecting content in consideration of the atmosphere that the atmosphere analysis unit has analyzed based on the talking of the persons.
(11) The information processing device according to any one of (1) to (10), wherein the atmosphere analysis unit analyzes the atmosphere of the space in which the sensor is installed, by additionally using temporal information at a time point at which the data has been collected by the sensor.
(12) The information processing device according to (11), wherein the process execution unit selects a process to be executed in consideration of the temporal information that the atmosphere analysis unit has used for the analysis of the atmosphere.
(13) The information processing device according to any one of (1) to (12), wherein the process execution unit presents advice for a person detected by the sensor based on a result of the analysis of the atmosphere analysis unit.
(14) An information processing device including: an atmosphere analysis unit that uses data about an action of a person detected by a sensor and determines an atmosphere of a space in which the sensor is installed; and a process execution unit that determines a process suitable for the space and the person based on the atmosphere of the space determined by the atmosphere analysis unit and executes the process.
(15) An information processing method including: analyzing an atmosphere of a space in which a sensor is installed using data collected by the sensor; and executing a process suitable for the space based on a result of the analysis in the atmosphere analysis step.
(16) A computer program for causing a computer to execute: analyzing an atmosphere of a space in which a sensor is installed, using data collected by the sensor; and executing a process suitable for the space based on a result of the analysis in the atmosphere analysis step.

## Claims

1. An information processing device comprising:
a control device to determine a mood in a space based on sensing data from at least one sensing device placed in the space, and to execute an appropriate operation based on the mood.

2. The information processing device of claim 1, wherein the at least one sensing device includes at least one of an imaging unit, a microphone, a depth sensor or an illuminance sensor.

3. The information processing device of claim 1 or 2, wherein the sensing data includes at least one of image data from an imaging unit or audio data from a microphone.

4. The information processing device of claim 1, 2 or 3, wherein the mood is determined by analyzing information of the sensing data indicating one or more selected from the group comprising: geolocation; number of persons; action of at least one person; time; and schedule of a user.

5. The information processing device of any preceding claim, wherein the execution of an appropriate action includes selection of musical data.

6. The information processing device of claim 5, wherein the control device controls at least one of volume of reproduction of the musical data or luminance of a display based on the mood, and/or wherein the musical data corresponds to a mood other than the mood determined.

7. The information processing device of any preceding claim, wherein the execution of an appropriate action includes presenting advice.

8. The information processing device of any preceding claim, wherein the control device includes a processor.

9. The information processing device of any preceding claim, wherein the space in which the at least one of the sensing devices is placed is different from a space in which the information processing device is placed.

10. The information processing device of any preceding claim, wherein the mood is determined from a table indicating categories of spaces.

11. The information processing device of any preceding claim, wherein information indicating the appropriate operation is stored in a memory associated with information indicating a time that the at least one sensing device acquired the sensing data.

12. The information processing device of any preceding claim, wherein the sensing data indicates at least one of sex and age of a person, an expression of the person, content of an operation performed by the person, distance between persons when a plurality of persons are in the space or sound of the space.

13. An information processing system comprising:
a first device configured to determine a mood in a space based on sensing data from at least one sensing device placed in the space; and
a second device to execute an appropriate operation based on the mood.

14. An information processing method comprising:
determining, by a processor, a mood in a space based on sensing data from at least one sensing device placed in the space, and executing an appropriate operation based on the mood.

15. A recording medium recorded with a program executable by a computer, the program comprising:
determining a mood in a space based on sensing data from at least one sensing device placed in the space, and executing an appropriate operation based on the mood.
